# EUROPÄISCHE PATENTSCHRIFT

(11) **EP 0 407 644 B1**
(45) Veröffentlichungstag und Bekanntmachung des Hinweises auf die Patenterteilung: **05.01.1994**
(21) Anmeldenummer: 89112915.7
(22) Anmeldetag: 14.07.1989
(51) Int. Cl.: A61C 13/265

(54) **Druckanker für Zahnprothetik**
Snap-in anchor for a dental prosthesis
Dispositif d'ancrage à bouton pour prothèse dentaire

(43) Veröffentlichungstag der Anmeldung: 16.01.1991
(73) Patentinhaber: Janevski, Jovan, D-70193 Stuttgart (DE)
(72) Erfinder: Janevski, Jovan, D-70193 Stuttgart (DE)

(56) Entgegenhaltungen:
- WO-A-79/00847
- WO-A-87/06121
- CH-A- 380 292

## Beschreibung

Die Erfindung betrifft einen Druckanker gemäß dem ersten Teil von Anspruch 1. Ein derartiger Druckanker ist aus der WO-A-8 706 127 bekannt.

Ein weiterer Druckanker ist aus der DE-Firmen-Reklame, CEKA REVAX, "Verplombungstechnik" in "Das Dental-Labor" 12,87, Seiten 1675 bis 1676 bekannt.

Derartige bekannte Druckanker dienen zur Herstellung einer lösbaren Verbindung zwischen Zahnersatz und einer Verankerung am Restgebiß oder ähnlichem, z.B. Stiftaufbauten, Implantate. Der eingangs erwähnte Druckanker weist eine zweiteilige Patrize auf, dessen eines Teil über eine Schwalbenschwanzführung mit der Zahnprothese verbunden ist, und dessen anderes Teil in dieses erste Teil eingeschraubt ist. Das zweite Teil., das als eigentliche Patrize funktioniert, ist unter Druck in die Matrize einschiebbar bzw. von dieser abziehbar und sorgt dadurch für die lösbare Verbindung zwischen Patrize und Matrize.

Bei derartigen bekannten Druckankern muß die Spannkraft nach kurzer Zeit nachaktiviert werden, da durch eine ungünstig gegebene Form des Druckknopfes dieser beim Kauvorgang in kurzen Zeitabständen immer wieder zusammengequetscht wird. Dieser Nachteil resultiert aus einem ungünstigen Angriffspunkt des Kaudruckes am Druckknopfankerpilz. Die Schraubverbindung zwischen dem zweiten eigentlichen Patrizenteil und dem in der Zahnprothese verankerten pilzförmigen ersten Teil ist nur über einige Gewindedrehungen möglich, so daß die beim Kauvorgang stark wirkenden Kräfte für eine Lockerung oder Zerstörung dieser Schraubverbindung sorgen können, so daß zum Ersatz des Patrizenteils der Ankerpilz aus der Zahnprothese herausgefräst werden muß.

Aus der EP-A-0 085 126 ist ein sog. Kugelschrauben-Federgelenk bekannt, das als trennbares Verbindungselement für Schaltprothesen und Freiensprothesen dient. In ein Matrizenteil kann formschlüssig ein Patrizenteil eingeschoben werden, wobei Matrize und Patrize derart ausgebildet sind, daß eine gelenkige Verbindung zwischen diesen beiden Teilen vorhanden ist und der Kaudruck vornehmlich auf die Schleimhaut übertragen wird. Derartige gelenkige Verbindungen funktionieren nicht als Druckanker im Sinne der vorliegenden Erfindung.

Um den neuen Richtlinien des Gesundheitwesens entsprechen zu können, werden preisgünstige Alternativen gesucht, bei denen die Qualitätssicherung gewährleistet ist.

Aufgabe der vorliegenden Erfindung ist daher, einen Druckknopfanker zu schaffen, der preisgünstig herstellbar ist, qualitativ gesichert ist und der gleichzeitig leicht auswechselbar ist.

Erfindungsgemäß wird dies durch einen Druckanker gemäß Anspruch 1 erreicht.

Der Druckanker ist so konstruiert, daß man ihn nach Bedarf leicht und billig komplett auswechseln kann. Außerdem bietet er den Vorteil, daß er durch seine doppelte Verankerung keinerlei Lotstellen aufweist und somit zur Minderung des Lokalelements im Munde führt.

Weitere vorteilhafte Ausgestaltungen sind den Unteransprüchen zu entnehmen.

Eine doppelte Verankerung findet einerseits dadurch statt, daß ein Druckknopffuß des Verankerungsteils der Patrize durch Hineinschieben in die Einschubschiene des Gehäuses am Zahnersatz mittels der Schraube fixiert wird, und daß andererseits eine Verankerung durch Einschnappen des Druckknopfes in die Matrize erreicht wird. Ein durch die Erfindung erzielter Fortschritt besteht auch darin, daß es zu keiner Quetschung des Druckknopfankers kommt, da an der Druckstelle eine nachgiebige Federkraftwirkung vorhanden ist, die stets in ihre Ursprungslage zurückkehren kann. Eine Nicht-Quetschung des Ankers wird durch eine Ausschaltung der Quetschangriffspunkte dadurch erreicht, daß sich der Angriffspunkt der Quetschung nicht in Berührungskontakt mit dem Quetschpunkt befindet, sondern federnd aufliegt und somit resilierend nachgibt, wobei die Verbiegungsgrenze nicht überschritten wird und der Ankerknopf in seine Ursprungsspannung zurückkehrt.

Der Druckknopf weist im Umfang eine größere Einschnappfläche auf, was zu einer besseren und sicheren Verankerung führt.

Die Erfindung wird nachfolgend anhand einiger ausgewählter Ausführungsbeispiele in Zusammenhang mit den beiliegenden Zeichnungen näher beschrieben und erläutert. Es zeigt:

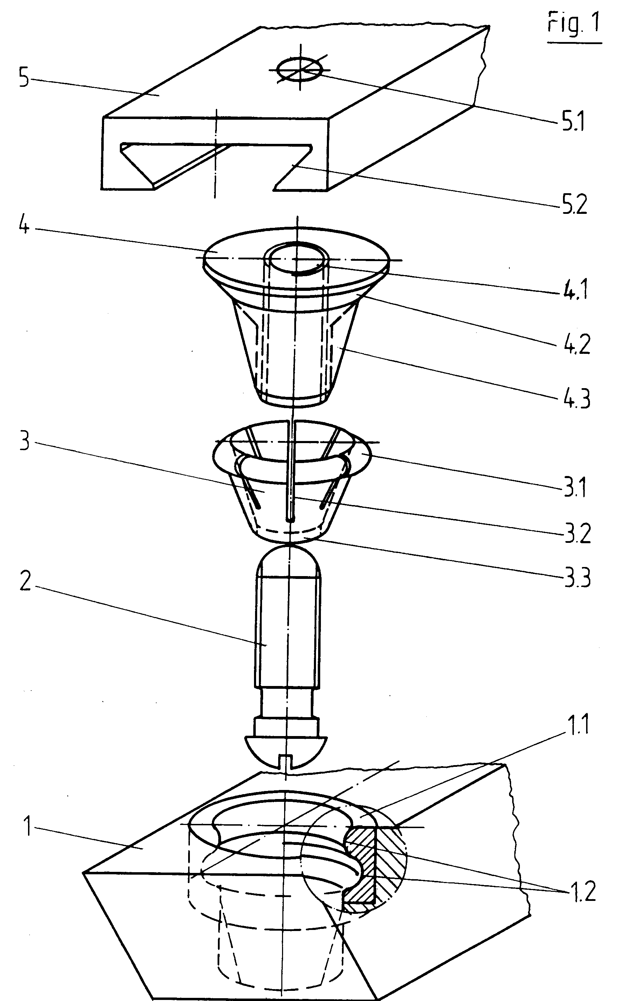

- Fig. 1: eine Explosionsansicht eines ersten Ausführungsbeispiels eines erfindungsgemäßen Druckankers,

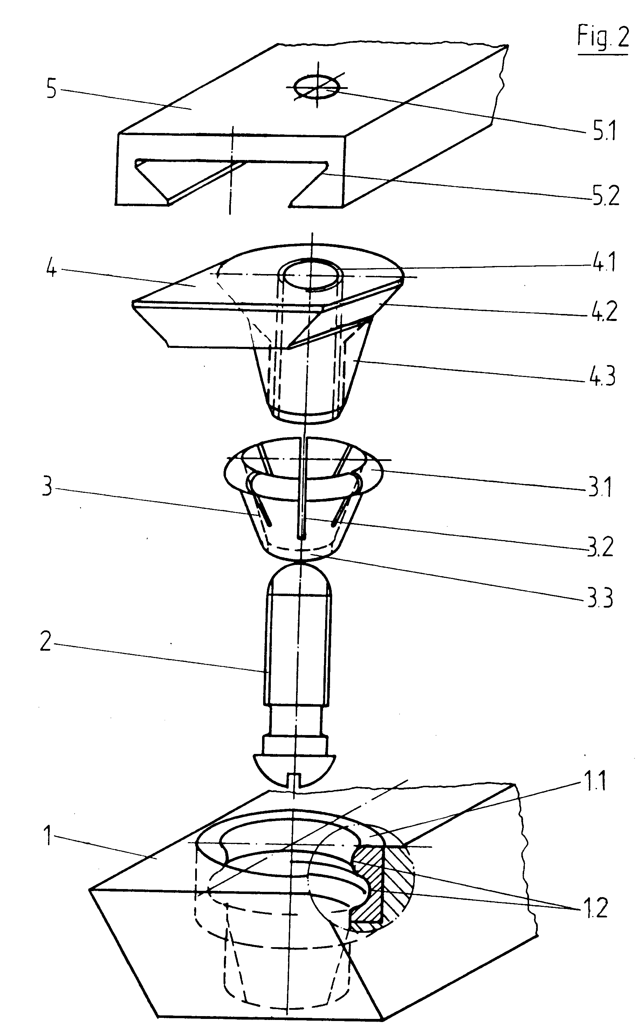

- Fig. 2: eine der Fig. 1 entsprechende Darstellung eines weiteren Ausführungsbeispiels mit einer weiteren Ausgestaltung eines Verankerungsteiles, und

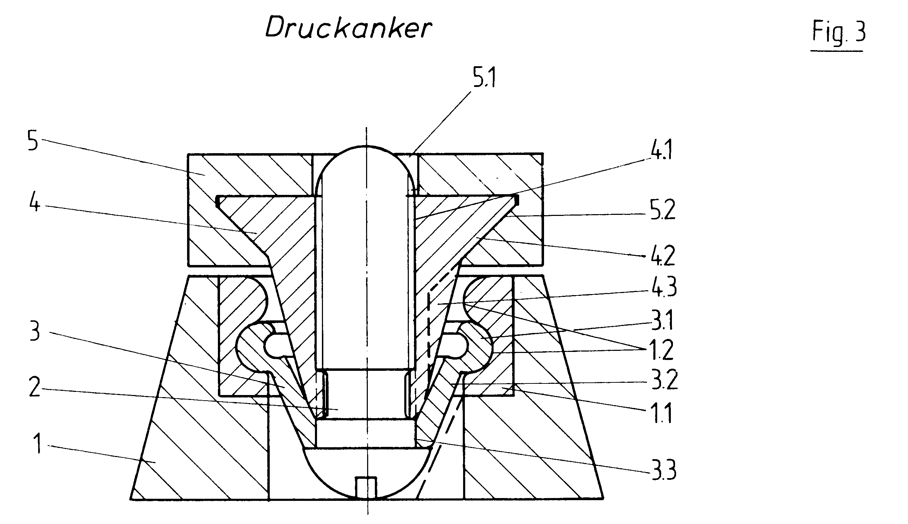

- Fig. 3: einen Schnitt durch den in Fig. 1 dargestellten Druckanker in zusammengebauten Zustand.
- Fig. 4: eine der Fig. 1 entsprechende Darstellung eines weiteren Ausführungsbeispiels mit einer weiteren Ausgestaltung des Druckknopfes in einem Stück hergestellt, (der Druck knopf (3) die Schraube (2) und Verlängerungshals (4.3).)

Ein erfindungsgemäßer Druckanker setzt sich aus folgenden Teilen zusammen:

Teil 5 - Befestigungseinrichtung die entsprechend der Gewindebohrung (4.1) des Verankerungsteiles der Patrize (4) eine korrespondierende Bohrung (5.1) aufweist, in die die Schraube (2) hineinragt und somit den Verankerungsteil der Patrize (4) gegen das Hinausschieben und Bewegen absichert. Die Befestigungseinrichtung (5) wird im abnehmbaren Zahnersatz eingearbeitet oder mitgegossen.
Die Befestigungseinrichtung (5) hat eine Einschubschiene (5.2) die von einer Seite offen ist, in die das Verankerungsteil (4.2) der Patrize schlüsselförmig hineingeschoben wird.

Teil 4 - Verankerungsteil der Patrize (4) weist eine korrespondierende Laufführung (4.2) die dem Verankerungsgehäuse (5) bei, hineinschieben in die Einschubschiene (5.2) formschlüssig passt. Der Verankerungsteil (4) der Patrize weist einen Verlängerungshals (4.3) auf, der zylindrisch, konisch oder kegelförmig hergestellt werden kann.
Durch die Mitte des Verankerungsteiles (4) der Patrize verläuft eine durchgehende Gewindebohrung (4.1) die eine ausreichende Zahl der Gewindesteigung aufweist und somit eine verbesserte Einschraubung der Schraube (2) und sicheren Halt des Druckknopfankers ermöglicht.
Bei herkömmlichen Ankern, die durch ihre Konstruktionsform Anwendung finden ist die Zahl der Gewindesteigung gering, so daß nicht genügend Halt gegeben ist und zu einem ständigen Herausdrehen des Ankers führt.

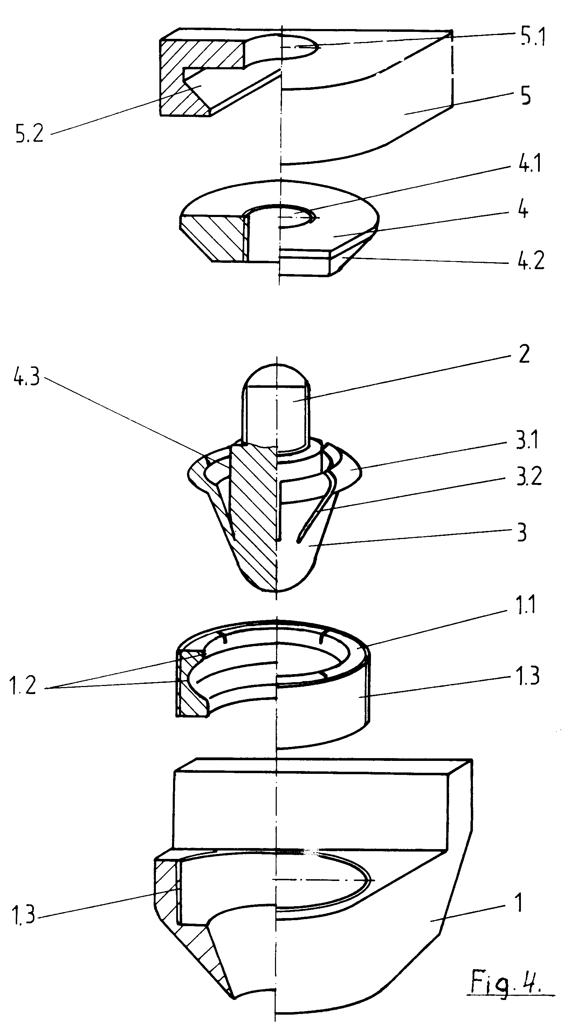

Teil 3 - Druckknopf, der eine zylindrische oder konisch sich verjüngende Kegelform aufweist, der sich hohlkörperförmig dem Verankerungsteil (4) der Patrize anpasst, der Druckknopf kann auch die Form eines runden Ringes mit Einschnitten, mit vorgegebenem Spielraum für die Federwirkung aufweisen.
Am Rande des äußeren Umfanges des Druckknopfes (3) befindet sich die Einschnappvorrichtung (3.1) die als Erhebung oder Vertiefung der Matrizeneinschnappvorrichtung (1.1) passend geformt ist. Mitten durch den Druckknopf (3) ist die Bohröffnung (3.3) für die Schraube (2) angebracht. Der Druckknopf kann auch in einem Stück hergestellt werden, wie in Fig. 4 in dem der Zapfen (Druckknopf), Hals (4.3) und die Schraube (2) eine Einheit bilden.

Teil 2 _ Befestigungs/Fixierschraube durchquert den Druckknopf (3) und bietet ihm durch Hineindrehen in den Verankerungsteil der Patrize (4) Halt und Befestigung. Gleichzeitig sichert sie den Verankerungsteil der Patrize (4) in der Einschubschiene (5.2) durch das Hineinragen in das Bohrloch (5.1) der Einschubschiene (5.2)

Teil 1 - Matrizenkörper weist einen Ring (1.1) auf, in dessen Ringöffnung an der Innenseite die Einschnappvorrichtung als eine Erhebung bzw. Vertiefung (1.2) angebracht ist. Der Druckknopf (3) findet durch seine Erhebung bzw. seine Vertiefung (3.1) in die Einschnappvorrichtung(1.2) der Matrize (1) die Verankerung durch das Hineinschnappen.

Der Matrizenmantel der aus Kunststoff oder NE/Edelmetallegierung hergestellt werden kann, umhüllt den Ring (1.1) der Einschnappvorrichtung.
Die Matrize wird am festsitzenden Zahnersatz eingearbeitet. Der Druckknopfanker kann so hergestellt werden, daß er in allen seinen Teilen in Kunststoff, NE/ Edelmetallegierungen oder in Stanzmetall angefertigt werden kann.
Die Einschnappvorrichtung der Matrize-Ring (1.1) kann auch ein Gewinde (1.3) aufweisen, die eine spätere Auswechslung des Matrizenringes (1.1) bei Abnutzung ermöglicht.

### Bezugszeichen

5- Befestigungseinrichtung / Gehäuse
   5.1- Bohrung
   5.2- Einschubschiene
4- Verankerungsteil der Patrize
   4.1- Gewindebohrung der Patrize
   4.2- Verankerungsteil der Patrize
   4.3- Verlängerungshals der Patrize
3.- Druckknopf
   3.1- Einschnappvorrichtung
   3.2- Einschnitt des Druckknopfes
   3.3- Bohrung des Druckknopfes
2- Schraube
1- Matrize
   1.1- Einschnappvorrichtung der Matrize / Ring
   1.2- Erhebung bez. Vertiefung der Einschnappvorrichtung
   1.3- Gewinde

## Patentansprüche

1. Druckanker zur Herstellung einer lösbaren Verbindung zwischen einer Zahnprothese und einer Verankerung an Kronen, Brücken oder Stegen, bestehend aus einer Matrize (1), die in eine Krone, Brücke oder einen Steg einarbeitbar ist, und einer Patrize (2,3,4,5), die an der Zahnprothese verankerbar ist, wobei die Befestigungseinrichtung der Patrize ein Gehäuse (5) mit einer seitlich offenen Einschubschiene (5.2) aufweist, in die passend ein Verankerungsteil (4) einschiebbar ist, welches eine Gewindebohrung (4.1) aufweist, in der eine Schraube (2) aufgenommen ist, welche das Verankerungsteil (4) mit einem Druckknopf (3) verbindet, der in einer Einschnappvorrichtung (1.1) der Matrize (1) eingeschnappt ist, dadurch gekennzeichnet, daß die im Verankerungsteil (4) aufgenommene Schraube (2) in eine im Gehäuse (5) vorgesehene Bohrung (5.1) eingreift, so daß das Verankerungsteil (4) am Gehäuse (5) fixiert ist.

2. Druckanker nach Anspruch 1, dadurch gekennzeichnet, daß das Verankerungsteil (4) einen Verlängerungshals (4.3) aufweist, der konisch, zylindrisch oder kegelförmig verläuft, und daß die Gewindebohrung (4.1) mittig durch das Verankerungsteil (4) vorgeschen ist.

3. Druckanker nach Anspruch 1 oder 2, dadurch gekennzeichnet, daß der Druckknopf (3) hohlförmig ausgebildet ist, daß er dem Verankerungsteil (4) dadurch anpaßbar ist, daß er mit Einschnitten (3.2) und mit einer mittig durchgehenden Bohrung (3.3) für die Schraube (2) versehen ist, und daß er am äußeren Rand eine Vorrichtung (3.1) in Form einer Erhebung oder Vertiefung zum Einschnappen in die Matrize (1) aufweist.

4. Druckanker nach Anspruch 3, dadurch gekennzeichnet, daß die Schraube (2) den Druckknopf (3) durch dessen Bohrung (3.3) durchquert.

5. Druckanker nach Anspruch 3 oder 4, dadurch gekennzeichnet, daß die Einschnappvorrichtung (1.1) eine innenseitige Erhebung mit daran auschließender Vertiefung (1.2) in Form eines Ringes aufweist, wobei die Einschnappvorrichtung (1.1) im Körper der Matrize (1) eingearbeitet ist, der aus Kunststoff, Edelmetall oder Nicht-Edelmetall besteht.

6. Druckanker nach Anspruch 5, dadurch gekennzeichnet, daß die Bohrung der Einschnappvorrichtung (1.1) schlüsselförmig dem Druckknopf (3) entspricht.

7. Druckanker nach einem der Ansprüche 3 bis 6, dadurch gekennzeichnet, daß der Druckknopf (3) aus mundbeständigem Edelmetall oder Nichtedelmetall gefräst oder gestanzt ist oder aus Kunststoff gepreßt hergestellt ist.

8. Druckanker nach Anspruch (7), dadurch gekennzeichnet, daß der Druckknopf (Knopfzapfen) (3) flach gestaltet ist, bis zur Form einer runden Scheibe, die mit den Einschnitten (3.2) versehen ist.

9. Druckanker nach Anspruch (8) ,dadurch gekennzeichnet, daß der Druckknopf - Zapfen (3) die Schraube (2) und Verlängerungshals (4.3) in einem Stück hergestellt sind.

10. Druckanker nach Anspruch (9), dadurch gekennzeichnet, daß die Einschnappvorrichtung der Matrize (1.1) auswechselbar ist, und daß sie ein Außengewinde (1.3) aufweist.

11. Druckanker nach einem der Ansprüche von 1 bis 10, dadurch gekennzeichnet, daß der gesamte Druckanker teilweise aus einer mundbeständigen Edelmetall-oder Nichtedelmetallegierung, oder daß alle Teile aus Kunststoff hergestellt sind.

## Claims

1. Pressure anchor for creating a separable connection between a denture and an anchor on crowns, ridges or bars, consisting of a matrix (1) worked into a crown, bridge or bar, and a male mould 2,3,4,5) that can be anchored to the denture, the fixture of the male mould having a casing (5) with a laterally open slot-in rail (5.2) into which an anchoring element (4) can be fitted which has a threaded hole (4.1) accommodating a screw (2) which joins the anchoring element (4) to a button (3) which is snapped into a snap-in device (1.1) of the matrix (1), characterized by the screw (2) in the anchoring element (4) engaging in a drilled hole (5.1) in the casing (5) in such a way as to secure the anchoring element (4) to the casing (5).

2. Pressure anchor as claimed in claim 2, characterized by the anchoring element (4) having an extension neck (4.3) of conical, cylindrical or tapered shape and by the threaded hole (4.4) running through the centre of the anchoring element (4).

3. Pressure anchor as claimed in any of claims 1 or 2, characterized by the button (3) being of hollow shape, being adaptable to the anchoring element (4), having recesses (3.2) and a central hole (3.3) for the screw (2), and having a device (3.1) on the outer edge in the form of a raised or recessed part for snapping into the matrix (1).

4. Pressure anchor as claimed in claim 3, characterized by the screw (2) passing through the hole 3.3) in the button (3).

5. Pressure anchor as claimed in any of claims 3 or 4, characterized by the snap-in device (1.1) having a ring-shaped inside raised part with adjacent recess (1.2), the snap-in device (1.1) being worked into the body of the matrix (1), which is made from plastic, precious metal or non-precious metal.

6. Pressure anchor as claimed in claim 5, characterized by the hole in the snap-in device (1.1) keying with the button (3).

7. Pressure anchor as claimed in any of claims 3 to 6, characterized by the button (3) being milled or punched out of mouth compatible precious metal or non-precious metal or moulded from plastic.

8. Pressure anchor as claimed in claim 7, characterized by the button knob (3) being flat in shape, approaching the shape of a round disk, which holds the recesses (3.2).

9. Pressure anchor as claimed in claim 8, characterized by the button knob (3), the screw (2) and the extension neck (4.3) being made from a single workpiece.

10. Pressure anchor as claimed in claim 9, characterized by the snap-in device of the matrix (1.1) being exchangeable and having an outside thread.

11. Pressure anchor as claimed in any of claims 1 to 10, characterized by the entire pressure anchor consisting partially of a mouth compatible precious or non-precious metal or consisting entirely of plastic.

## Revendications

1. Ancre à pression destinée à établir une liaison amovible entre une prothèse dentaire et un ancrage sur des couronnes, bridges ou des barrettes, composée d'une matrice (1) qui est insérable dans une couronne, un bridge ou une barrette, et d'un poinçon (2, 3, 4, 5) qui est ancrable sur la prothèse dentaire, le dispositif de fixation du poinçon présentant un boîtier (5) avec un rail d'introduction ouvert sur le côté (5, 2) dans lequel une pièce d'ancrage (4) est parfaitement introductible, celle-ci présentant un taraudage (4.1) dans lequel une vis (2) est accueillie, celle-ci reliant la pièce d'ancrage (4) avec un bouton à pression (3) qui est encliqueté dans un dispositif d'encliquetage (3) de la matrice (1), caractérisé en ce que la vis (2) accueillie dans la pièce d'ancrage (4) s'engrène dans l'alésage (5.1) prévu dans le boîtier (5) de telle sorte que la pièce d'ancrage (4) est fixée au boîtier (5).

2. Ancre à pression selon la revendication 1, caractérisée en ce que la pièce d'ancrage (4) présente un cou de rallonge (4.3) qui présente une forme conique, cylindrique ou conoïdale et que le taraudage (4.1) est prévu au centre à travers la pièce d'ancrage (4).

3. Ancre à pression selon la revendication 1 ou 2, caractérisée en ce que le bouton à pression est conçu en creux, qu'il est ainsi adaptable à la pièce d'ancrage (4), qu'il est pourvu d'entailles (3.2) et d'un alésage continu au centre (3.3) pour la vis (2) et qu'il présente au bord extérieur un dispositif (3.1) sous forme d'une élévation ou d'un creusement pour l'encliquetage dans la matrice (1).

4. Ancre à pression selon la revendication 3, caractérisée en ce que la vis (2) traverse le bouton à pression (3) par son alésage (3 3).

5. Ancre à pression selon la revendication 3 ou 4, caractérisée en ce que le dispositif d'encliquetage (1.1) présente une élévation intérieure suivie d'un creusement (1.2) sous forme d'une anneau, le dispositif d'encliquetage étant inséré dans le corps de la matrice (1) qui est en matière plastique, acier spécial ou en métal non précieux.

6. Ancre, à pression selon la revendication 5, caractérisée en ce que l'alésage du dispositif d'encliquetage (1.1) en forme de clé correspond au bouton à pression (3).

7. Ancre à pression selon les revendications 3 à 6, caractérisée en ce que le bouton à pression (3) est fraisé ou poinçonné dans un métal précieux ou non précieux résistant en bouche ou pressé en plastique.

8. Ancre à pression selon la revendication (7), caractérisée en ce que le bouton à pression (tenon du bouton) (3) est de forme plate jusqu'à celle d'une rondelle ronde qui est pourvue avec les entailles (3.2).

9. Ancre à pression selon la revendication (8), caractérisée en ce que le tenon du bouton à pression (3), la vis (2) et le cou de rallonge (4.3 à sont fabriqués en une seule pièce.

10. Ancre à pression selon la revendication (8), caractérisée en ce que le dispositif d'encliquetage de la matrice (1.1) est échangeable et qu'il présente un filetage extérieur (1.3).

11. Ancre à pression selon les revendications de 1 à 10, caractérisée en ce que l'ensemble de l'ancre à pression est fabriqué, partiellement, en alliage de métal précieux ou non précieux résistant en bouche, ou que toutes les pièces sont fabriquées en matière plastique.
